Europäisches Patentamt

European Patent Office

Office européen des brevets

(11) Publication number: **0 187 244**

**B1**

(12) **EUROPEAN PATENT SPECIFICATION**

(45) Date of publication of patent specification: **22.06.88**

(51) Int. Cl.⁴: **F 16 B 39/282**

(21) Application number: **85115065.6**

(22) Date of filing: **27.11.85**

(54) Vibration resistant fastener for soft joint surfaces.

(30) Priority: **10.12.84 US 680212**

(43) Date of publication of application:
**16.07.86 Bulletin 86/29**

(45) Publication of the grant of the patent:
**22.06.88 Bulletin 88/25**

(84) Designated Contracting States:
**AT BE CH DE FR GB IT LI LU NL SE**

(56) References cited:
**DE-C- 673 924**
**US-A-1 715 777**
**US-A-1 740 113**
**US-A-2 112 494**
**US-A-2 147 211**
**US-A-2 322 776**

(73) Proprietor: **SPS TECHNOLOGIES, INC.**
**Newtown-Yardley Road**
**Newtown Pennsylvania 18940 (US)**

(72) Inventor: **Landt, Richard C.**
**561 Beck Road - RD No. 1**
**Souderton Pennsylvania 18964 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The invention relates to a self-locking fastener according to the preamble part of claim 1.

A self-locking fastener as known from DE—C—673 924 shows a plurality of serrations of limited radial extension being surrounded by the even main bearing surface of the fastener. Within the radial extension of each serration said main bearing surface does not extend to the front side of each tooth-seen in the direction of tightening-and therefore, does not limit the penetration of the teeth during tightening of the fastener. The tightened fastener cannot rest with the main bearing surface on the work-piece surface, because material hills resulting from the deformation of the work-piece surface press strongly against the long front slopes of the teeth. Due to the tightening movement and depending on the pitch of the fastener thread, each tooth forms a significantly long circumferentially extending recess in the work-piece surface so that no real load transmitting bearing contact results between the main bearing surface of the fastener and the work-piece surface. To reduce this negative effect the teeth have to be spaced apart as far as possible. Said measure consequently reduces the entire locking capacity, since with a given diameter only a limited number of teeth are possible. Finally, the limited radial extension and the small number of teeth lead to locally concentrated stress on and increased marring of the work-piece surface.

It is the task of the invention to achieve a self-locking fastener, particularly for work-pieces having relatively soft surfaces, and to minimise marring of the work-piece surface.

This task is solved by the features according to the characterizing part of claim 1.

The intermediate surface in front of each tooth interrupts the working side of the tooth and, thus, limits the penetration of the teeth, while allowing for some relief in the region of the root of the next tooth. The first sloping surface extends from the crest to the intermediate surface and cooperates with the intermediate surface, so that the penetration of each tooth is gently limited to an extent with which the marring effect is minimised and a good locking effect is reached. The two cooperating surfaces do not only limit the penetration but also control it in a gentle manner.

Preferred embodiments are disclosed in the dependent claims.

The invention is described in connection with the drawings. In the drawings is

Figure 1 a perspective view of a self-locking bolt,

Figure 2 an enlarged portion of the self-locking bolt shown in Figure 1,

Figure 3 an enlarged portion of a cross sectional view of a detail,

Figure 4 an enlarged portion of a cross sectional view of another embodiment,

Figure 5 a perspective view of a self-locking nut, and

Figure 6 a perspective view of a self-locking washer.

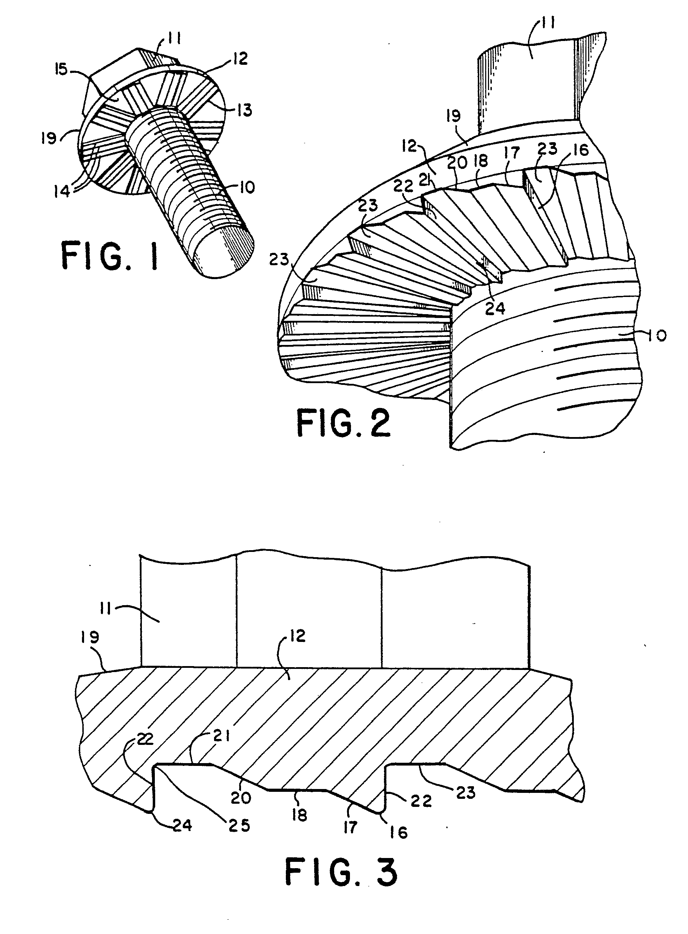

Referring to Figure 1, a self-locking bolt 10 includes a threaded shank and a bolt head 11 at one end of shank. Bolt head 11 has a bearing flange 12. The bearing surface of flange 12, that is the surface to be placed in bearing contact against a workpiece (not shown), is provided with a plurality of outwardly disposed serrations 13. In this embodiment the serrations form sets of preferably two, for example serrations 14, which are parallel to each other leaving a wedge-shaped portion, for example 15, between the sets. Seration sets are defined as the surfaces represented in Figure 1 by four parallel lines.

In another embodiment (not shown) the bearing surface of flange 12 may include a plurality of radially disposed serrations rather than the parallel serration sets 14.

Referring to Figure 2, which is an enlarged portion of the perspective view of the self-locking bolt 10 shown in Figure 1, bolt head 11 is at one end of threaded shank and includes bearing flange 12. The bearing surface of flange 12 has, in this embodiment, outwardly disposed serrations. When viewed along a cylinder concentric with the longitudinal axis of bolt 10, the crest of a tooth is represented by 16. A downwardly inclined surface 17 starts at crest 16 and ends at one end of an intermediate parallel surface 18. Surface 18 can be considered generally parallel to the bearing surface of flange 12 or the non-bearing top surface 19 of flange 12. A second downwardly inclined surface 20 starts at the other end of parallel surface 18 and extends downwardly to a root 21 of the next tooth. Root 21 of the next tooth is connected by a wall 22, which is generally parallel to the longitudinal axis of the bolt, to the crest 24 of that tooth. Because the serrations in this embodiment are parallel to each other, a pie-shaped wedge 23 separates successive parallel sets. Three pie-shaped wedges 23 are shown to illustrate this feature of the first embodiment. Each pie-shaped wedge 23 is at the same plane as root 21. Although wall 22 can generally be considered to be 90° to the plane of the bearing surface, variations from 90° are acceptable.

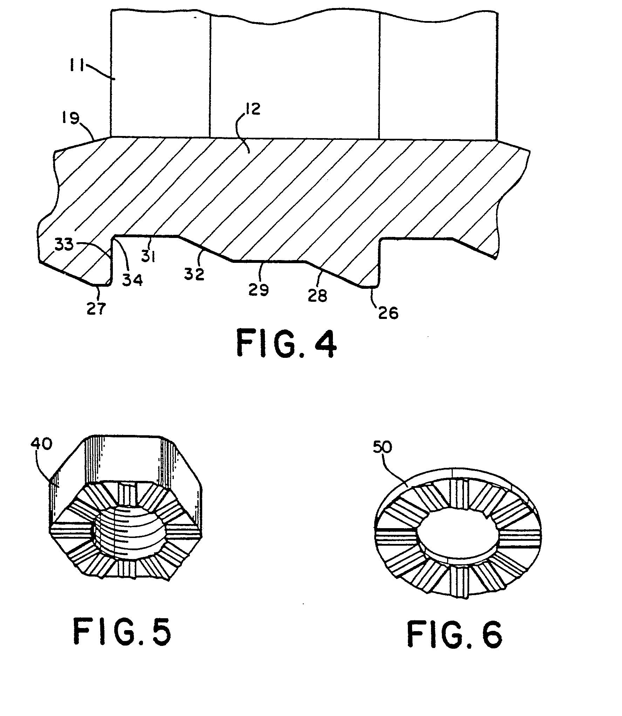

Figure 3 is an enlarged cross sectional view of one set of serrations shown in Figure 2. From crest 16 of the tooth, downwardly inclined surface 17 proceeds to one end of intermediate parallel surface 18. As previously described, surface 18 is generally parallel to bearing flange 12. Surface 18 is at a shallower depth, compared to crests 16 or 24, than the greater depth of root 21. From the other end of intermediate parallel surface 18, a downwardly inclined surface 20 extends to root 21 of the adjacent tooth. Wall 22 extends from root 21 to crest 24 of the adjacent tooth. Surfaces 17, 18, 20, 21 and 22 along with crest 16 can be considered as one set of serrations. When viewed at a right angle to surface 18, the set consists of four parallel lines.

Figure 3 also shows that root 21 is connected to wall 22 by a radius or fillet 25. Crests 16 and 24 are also preferably radiused rather than having sharp edges.

Figure 4 is an enlarged cross sectional view of one set of serrations of another embodiment, which differs from Figure 3 in that crests 26 and 27 of the teeth are truncated with small flats. A downwardly inclined surface 28 starts at truncated crest 26 and extends to one end of an intermediate surface 29, that is generally parallel to the bearing surface of flange 12. Surface 29 is at a level between that of crest 26 and a root 31. Another downwardly inclined surface 32 begins at the other end of surface 29 and extends to root 31. Surfaces 26, 28, 29, 31, 32 and 33 can be considered as one set of serrations. A fillet 34 connects root 31 with a wall 33 that is generally perpendicular to the surface of flange 12.

Figure 5 shows a fastener in form of a nut 40.

Figure 6 shows a fastener in form of a washer 50.

In general, means are provided for limiting the fastener's serrations from penetrating too deeply into the mating surface of the workpiece while still providing "off" torques which are greater than "on" torques. This control is provided by the intermediate shallower parallel surfaces (for example 18 in Figure 3, and 29 in Figure 4). As the fastener is seated, the crests 16, 26 of the serrations engage the mating surface of the workpiece and begin to penetrate the workpiece. Penetration continues until parallel surfaces 18, 29 contact the mating surface of the workpiece. At this point the total bearing area in contact at the mating surface will be sufficient to resist further penetration.

Parallel surfaces 18, 29 can be considered intermediate surfaces which are closer axially to the non-bearing surface of the bolt than the crests of the teeth and which are further axially to the non-bearing surface of the bolt than the roots of the teeth. As a result of the relative location of the intermediate surfaces, the teeth are adapted to penetrate into a mating workpiece surface in which the bolt is being installed, and the intermediate surfaces are adapted to control and limit the extent of penetration of the teeth into the workpiece surface when the fastener is operationally installed with the roots of the teeth not bearing against the workpiece surface.

In particular the fasteners disclosed are more suitable for use on workpieces consisting of soft material such as cast-aluminum or non-heat-treated carbon steel.

Different further orientations for the serrations may also be employed with equally beneficial results.

## Claims

1. Self-locking fastener (10, 40, 50) for a predetermined direction of tightening having at least one bearing surface, said bearing surface comprising:
a plurality of serrations (13), in the form of teeth when viewed along a cylinder concentric with the longitudinal axis of the fastener, each of said teeth having a root (21, 31) and a crest (16, 26) such that said roots (31, 21) of said teeth generally define a first plane and said crests (16, 26) of said teeth generally define a second plane;
a wall (22, 23) extending from the crest (16, 26) of each said tooth to the root (21, 32) of said tooth; characterized by
a plurality of intermediate surfaces (18, 29) each being disposed between two of said teeth and in front of each crest (16, 26) — seen in the direction of tightening — said intermediate surfaces (18, 29) being generally disposed between said first and second planes, and by
a first inclined surface (17, 28) extending from each of said crests (16, 26) in the direction of tightening to one of said intermediate surfaces (18, 29), such that said teeth are adapted to penetrate into a work-piece surface in which said self-locking fastener is being installed and said intermediate surfaces (18, 29) are adapted to control and limit the extent of penetration of said teeth into the work-piece surface when said self-locking fastener is operatively installed and said roots (21, 31) of said teeth do not bear against said work-piece surface.

2. Self-locking fastener of claim 1, characterized in that each of said intermediate surfaces (18, 29) is generally parallel to said first and second planes.

3. Self-locking fastener of one of the claims 1 and 2 characterized in that said bearing surface further comprises a plurality of second inclined surfaces (20, 32) each extending in the direction of tightening from one of said intermediate surfaces (18, 29) to one of said roots (21, 31).

4. Self-locking fastener of claim 1 characterized in that said crests (16, 26) are radiused or truncated.

5. Self-locking fastener of claim 1, characterized in that said crests (16, 26) each define a straight radial line originating from the same point on the longitudinal axis of the fastener.

6. Self-locking fastener of claim 1, characterized in that said serrations (13) are parallel to each other in sets and that said sets are separated by pie-shaped wedges (23).

7. Self-locking fastener of claim 6, characterized in that each of said pie-shaped wedges (23) is disposed generally within said first plane.

8. Self-locking fastener of at least one of claims 1 to 7, characterized in that said fastener is a bolt (10), a nut (40) or a washer (50).

## Patentansprüche

1. Selbstsicherndes Befestigungselement (10, 40, 50) mit vorbestimmter Anzugsdrehrichtung und mit wenigstens einer Auflagefläche, wobei in der Auflagefläche vorgesehen sind:
eine Vielzahl von Sicherungszähnen (13), die in einer Ansicht eines mit der Längsachse des Befestigungselementes konzentrischen Zylinders die Form von Zähnen haben, wobei jeder Zahn ein Wurzel (21, 31) und einen Kamm (16, 26) aufweist, derart, daß die Wurzeln (31, 21) der Zähne eine erste allgemeine Ebene definieren und die Kämme (16, 26) der Zähne eine zweite allgemeine Ebene definieren; und

eine sich vom Kamm (16, 26) jedes dieser Zähne zur Wurzel (21, 32) erstreckende Wand (22, 33), gekennzeichnet durch

eine Vielzahl von Zwischenflächen (18, 29), von denen jede zwischen jeweils zweien der Zähne und vor jedem Kamm (16, 26) — in Anzugsdrehrichtung gesehen — angeordnet ist, wobei die Zwischenflächen (18, 29) im wesentlichen zwischen den ersten und zweiten Ebenen liegen, und durch

eine erste schräge Fläche (17, 28), die sich in Anzugsdrehrichtung vom Kamm (16, 26) zur Zwischenfläche (18, 29) erstreckt, derart, daß die Zähne zum Eindringen in die Fläche eines Werkstückes ausgebildet sind, in das das selbstsichernde Befestigungselement installiert wird, wobei die Zwischenflächen (18, 29) so ausgebildet sind, daß sie das Ausmaß des Eindringens der Zähne in die Fläche des Werkstückes bei Installieren des selbstsichernden Befestigungselementes steuern und begrenzen, ohne die Wurzeln (21, 31) der Zähne gegen die Fläche des Werkstückes zur Anlage zu bringen.

2. Selbstsicherndes Befestigungselement gemäß Anspruch 1, dadurch gekennzeichnet, daß jede Zwischenfläche (18, 29) im wesentlichen parallel zu den ersten und zweiten Flächen liegt.

3. Selbstsicherndes Befestigungselement gemäß einem der Ansprüche 1 und 2, dadurch gekennzeichnet, daß die Auflagefläche weiterhin eine Vielzahl von zweiten schrägen Flächen (20, 32) aufweist, von denen sich jede in Anzugsdrehrichtung von einer der Zwischenflächen (18, 29) zu einer der Wurzeln (21, 31) erstreckt.

4. Selbstsicherndes Befestigungselement nach Anspruch 1, dadurch gekennzeichnet, daß die Kämme (16, 26) abgerundet oder abgeflacht sind.

5. Selbstsicherndes Befestigungselement nach Anspruch 1, dadurch gekennzeichnet, daß jeder Kamm (16, 26) einer geraden radialen Linie folgt, und daß die Gesamtheit der radialen Linien am selben Punkt der Längsachse des Befestigungselementes beginnt.

6. Selbstsicherndes Befestigungselement nach Anspruch 1, dadurch gekennzeichnet, daß die Sicherungszähne (13) in einzelnen Sätzen angeordnet und in jedem Satz zueinander parallel sind, und daß die Sätze durch kuchenstückförmige Keile (23) voneinander getrennt sind.

7. Selbstsicherndes Befestigungselement gemäß Anspruch 6, dadurch gekennzeichnet, daß jeder der kuchenstückförmigen keile (23) im wesentlichen innerhalb der ersten Ebene liegt.

8. Selbstsicherndes Befestigungselement nach wenigstens einem der Ansprüche 1 bis 7, dadurch gekennzeichnet, daß das Befestigungselement ein Schraubbolzen (10), eine Schraubenmutter (40) oder eine Unterlegscheibe (50) ist.

**Revendications**

1. Dispositif de fixation autobloquant (10, 40, 50) conçu pour une direction de serrage prédéterminée et présentant au moins une surface d'appui, ladite surface d'appui comprenant:

de multiples crénelures (13) se présentant sous la forme de dents lorsqu'elles sont observées le long d'un cylindre concentrique à l'axe longitudinal du dispositif de fixation, chacune desdites dents comprenant une racine (21, 31) et une crête (16, 26), de telle sorte que lesdites racines (31, 21) desdites dents délimitent pour l'essentiel un premier plan, et que lesdites crêtes (16, 26) de ces dents délimitent pour l'essentiel un second plan;

une paroi (22, 33), s'étendant de la crête (16, 26) de chaque dent précitée jusqu'à la racine (21, 32) de cette dent; caractérisé par

de multiples surfaces intermédiaires (18, 29) dont chacune est disposée entre deux desdites dents et à l'avant de chaque crête (16, 26) — considérée dans la direction du serrage —, lesdites surfaces intermédiaires (18, 29) étant sensiblement intercalées entre lesdits premier et second plans; et par

une première surface inclinée (17, 28) s'étendant à partir de chacune desdites crêtes (16, 26), dans la direction du serrage, jusqu'à l'une desdites surfaces intermédiaires (18, 29), de telle sorte que lesdites dents soient conçues pour pénétrer dans la surface d'une pièce dans laquelle ledit dispositif de fixation autobloquant est en cours d'implantation, et que lesdites surfaces intermédiaires (18, 29) soient conçues pour maitriser et limiter l'ampleur de la pénétration desdites dents, dans la surface de la pièce, lorsque ledit dispositif de fixation autobloquant est en condition de fonctionnement opérationnel, et lesdites racines (21, 31) desdites dents ne portent pas contre ladite surface de la pièce.

2. Dispositif de fixation autobloquant selon la revendication 1, caractérisé par le fait que chacune desdites surfaces intermédiaires (18, 29) est sensiblement parallèle auxdits premier et second plans.

3. Dispositif de fixation autobloquant selon l'une des revendications 1 et 2, caractérisé par le fait que ladite surface d'appui présente en outre de multiples secondes surfaces inclinées (20, 32) dont chacune s'étend, dans la direction du serrage, de l'une desdites surfaces intermédiaires (18, 29) jusqu'à l'une desdites surfaces intermédiaires (18, 29) jusqu'à l'une desdites racines (21, 31).

4. Dispositif de fixation autobloquant selon la revendication 1, caractérisé par le fait que lesdites crêtes (16, 26) sont arrondies ou tronquées.

5. Dispositif de fixation autobloquant selon la revendication 1, caractérisé par le fait que lesdites crêtes (16, 26) délimitent chacune une ligne droite radiale, dont l'origine se trouve au même point sur l'axe longitudinal du dispositif de fixation.

6. Dispositif de fixation autobloquant selon la revendication 1, caractérisé par le fait que lesdites crénelures (13) sont agencées en des jeux mutuellement parallèles; et par le fait que ces jeux sont séparés par des coins (23) en forme de part.

7. Dispositif de fixation autobloquant selon la revendication 6, caractérisé par le fait que chacun desdits coins (23) en forme de part se trouve, pour l'essentiel, dans les limites dudit premier plan.

8. Dispositif de fixation autobloquant selon au moins l'une des revendications 1 à 7, caractérisé par le fait que ce dispositif de fixation est un boulon (10), un écrou (40) ou une rondelle (50).

FIG. I

FIG. 2

FIG. 3

1

0 187 244

FIG. 4

FIG. 5

FIG. 6